# EUROPEAN PATENT SPECIFICATION

(11) **EP 0 439 525 B1**
(45) Date of publication and mention of the grant of the patent: **01.03.1995**
(21) Application number: 89912125.5
(22) Date of filing: 17.10.1989
(51) Int. Cl.: G01N 21/76

(54) **LUMINESCENCE OR FLUORESCENCE MONITORING APPARATUS AND METHOD**
REGELUNGSVERFAHREN UND -ANORDNUNG FÜR DIE LUMINESZENZ ODER FLUORESZENZ
PROCEDE ET APPAREIL PERMETTANT DE CONTROLER LA FLUORESCENCE OU LA LUMINESCENCE

(30) Priority: 21.10.1988 GB 8824712
(43) Date of publication of application: 07.08.1991
(73) Proprietor: BIOTRACE LTD., Bridgend CF31 3NA (GB)
(72) Inventor: JOHNSON, Ian Roy, St. Brides Major, Mid Glamorgan CF32 OSL (GB); GOODFIELD, Clive, Pontypridd, Mid Glamorgan CF37 1EN (GB)
(74) Representative: Gibson, Stewart Harry
(86) International application number: GB8901228
(87) International publication number: WO9004775

(56) References cited:
- EP-A-00 381 34
- WO-A-82/00356
- WO-A-85/03518
- DE-A-23 310 01
- GB-A-20 014 34
- GB-A-21 788 47
- US-A- 3 359 973

## Description

This invention relates to a hygiene monitoring apparatus which monitors luminescent or fluorescent light emission.

It is known to test for bacteria or other living cells by taking a sample and releasing adenosine triphosphate (ATP) contained within the cells using an appropriate reagent together with the enzyme luciferase in order to cause the emission of light. The light output is related to a concentration of ATP in the sample. The light output is however very small and hitherto the light detecting apparatus has made use of a photomultiplier tube in order to provide a measurable electrical signal output. Photomultipliers require a high voltage power supply, normally only available in the laboratory. Hitherto testing for living cells has been carried out by taking a sample in the field, then analysing the sample at a central laboratory either by conventional culture techniques using plate counts, or using luminescence monitoring apparatus with which the laboratory is equipped, together with a power supply appropriate for the photomultiplier tube of that apparatus.

GB-A-2 001 434 discloses a hygiene monitoring apparatus which comprises a sample chamber for receiving a vessel containing a light-emitting substance, a photodetector for receiving the emitted light, and an electrical circuit for measuring the light received by the photodetector. The sample chamber is formed in a side wall thereof with a light outlet for passing light to the photodetector, which is a photodiode, and an opening in its top through which the sample containing vessel can be lowered to an operative position relative to the light outlet.

In accordance with this invention, there is provided a hygiene monitoring apparatus, comprising a sample chamber for receiving a vessel containing a light-emitting substance, a photodetector for receiving the emitted light, and a electrical circuit for measuring the light received by the photodetector, characterised in that the photodetector comprises an avalanche photodiode and said electrical circuit includes a counter which counts discrete electrical signals issued by the avalanche photodiode within a predetermined period of time in response to photons received from the light emitting substance, and circuitry for cooling and temperature-stabilising said avalanche photodiode.

The avalanche photodiode is a semi-conductor device which is extremely light-sensitive and responds to a low level of received light to provide a measurable electrical output signal. the circuitry for the avalanche photodiode does not require as high a voltage or as high a current power supply as photomultipliers, and can be powered by batteries. Furthermore the avalanche photodiode is, in contrast with photomultiplier, robust and not adversely affected by exposure to intense light. Thus the hygiene monitoring apparatus in accordance with this invention can be a portable device.

The hygiene monitoring apparatus in accordance with this invention may be used for measuring the light emitted by substances spontaneously, and it may be used for measuring the light emitted by substances once excited by exposure to light (i.e. fluorescent substances) and references in this specification to a luminescence monitor (or to a light-emitting substance) are intended to include a monitor measuring light produced by fluorescence (or to a fluorescent substance).

The hygiene monitoring apparatus described above may be used for a wide variety of other sample testing applications, for example testing raw and final products in the food industry, pharmaceutical preparations, water quality and clinical samples. In these cases, a modified monitoring kit is appropriate. Such a modified kit would comprise a portable carrying case containing the monitoring apparatus, a plurality of pipette tips, a pipette for coupling to each pipette tip, a plurality of sample vessels, and containers of breakage reagent and enzyme.

In use of this modified kit, the sample to be tested is introduced into a sample vessel and then using the pipette with a tip coupled to it, appropriate quantities of the breakage reagent and of the enzyme are also introduced into the sample vessel. The sample vessel is finally placed in the monitor to measure the light emission.

Embodiments of this invention will now be described by way of examples only and with reference to the accompanying drawings, in which:
FIGURE 1 is a plan view of a hygiene monitoring kit shown with its carrying case open;
FIGURE 2 is a side view of the kit shown in Figure 1;
FIGURE 3 is an enlarged plan view of a reagent kit of the hygiene monitoring kit;
FIGURE 4 is a section through a pipette tip when receiving a swab from a swab holder;
FIGURE 5 is a section through the pipette tip when engaged with a pipette;
FIGURE 6 is a section through one form of sample chamber of a portable luminescence monitor of the kit;
FIGURE 7 is a section through another form of sample chamber;
FIGURE 8 is a section through a further form of sample chamber;
FIGURE 9 is a plan view of the sample chamber shown in Figure 8;
FIGURE 10 is a block diagram of the circuit of the monitor, and
FIGURE 11 is a plan view of another embodiment of sample testing kit shown with its carrying case open.

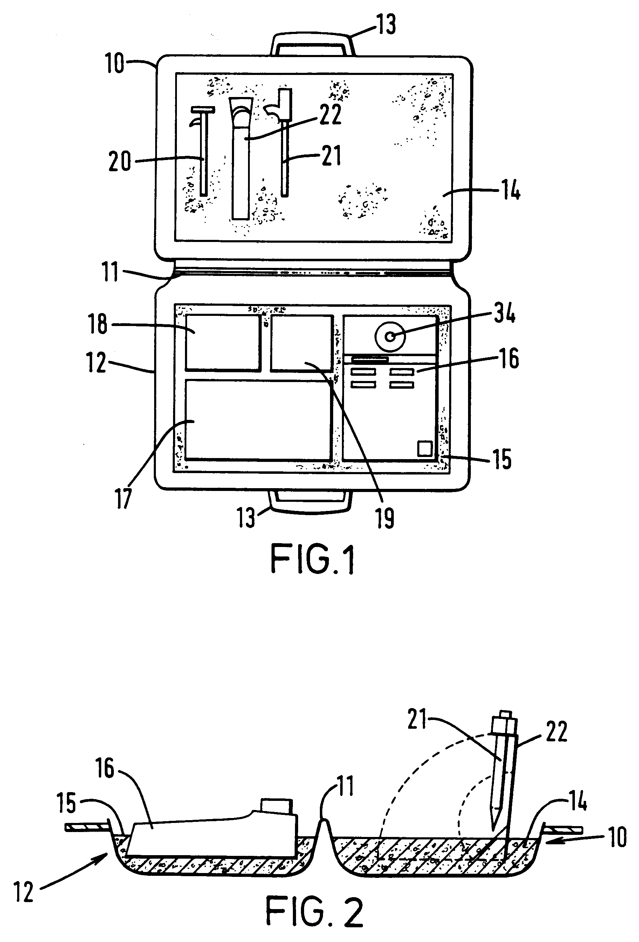

Referring to Figures 1 and 2, a portable hygiene monitoring kit comprises a carrying case having upper and lower halves 10, 12 which are hinged to each other at 11. When closed together and fastened by means of integral catches, the case may be carried by means of a handle 13. When opened up as shown, the two halves of the case lie flat on an e.g. table or benchtop. In the interior of the case, each half receives a number of items or components of the kit within recesses formed in inserts 14, 15 of plastics foam cushioning material. In the lower half 12 of the casing, there is disposed a portable luminescence monitor 16, a reagent kit 17 and a pack of sterile stencils 18. The luminescence monitor 16 may be powered by batteries housed within its own casing, but additionally or instead a power pack 19 may be provided. In the upper half 10 of the case, there is disposed a swab holder 20 and a pipette 21. Further a pipette holder 22 is mounted in the upper half 10 of the case and is movable between a first position in which it is laid flat into a recess in the foam insert 14 and an upright position as shown in Figure 2.

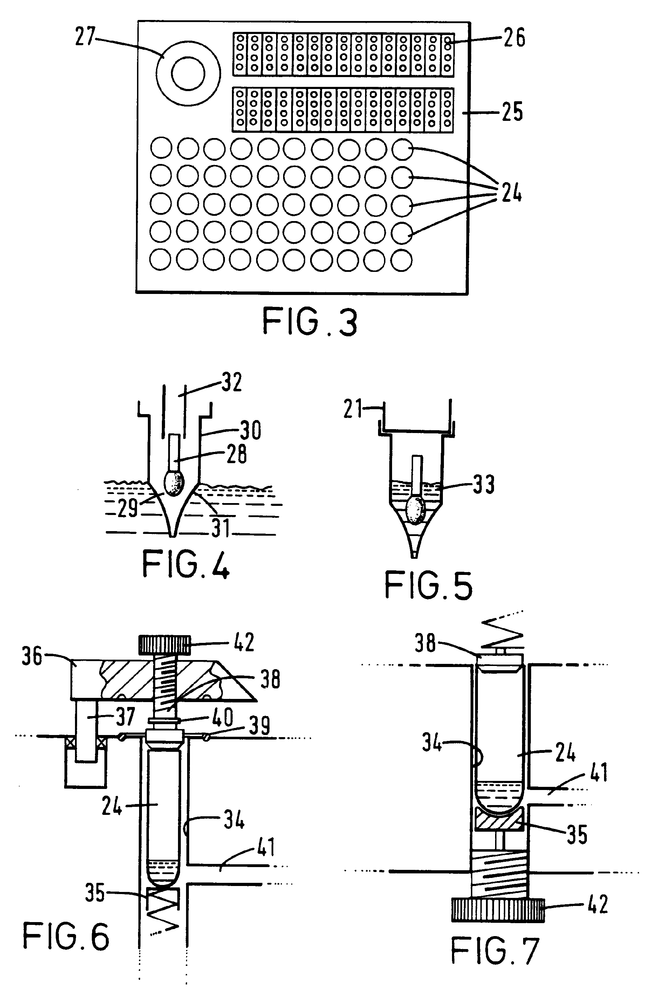

Referring to Figure 3, the reagent kit 17 comprises a plurality of cuvettes 24, a plurality of strips of sterile swabs 25, a plurality of sterile pipette tips 26 and a bottle of liquid extractant 27. Each of the cuvettes 24 contains a correct quantity of appropriate enzyme, either powdered or freeze dried onto the inner surface of the cuvette, and the cuvette is closed by a cap.

As shown in Figure 4, each swab comprises a short stem 28 provided with an absorbent head 29. Each pipette tip has a barrel portion 30, a tapering lower end 31 and an upper end shaped to fit onto the lower end of the pipette.

In use of the hygiene monitoring kit, a swab is taken out of its individual packaging, and gripped in the lower end of the swab holder 20. The latter has a tubular lower end 32 which is split to form gripping fingers, which are caused to open up when an actuator at the upper end of the swab holder is depressed (so that the gripping end 32 may be engaged over the free end of the swab stem), and which will close up again (to grip the swab stem) when the actuator is released. Then by holding the swab holder, the user wipes the head 29 of the swab over a surface to be tested. Once the sample has in this manner been taken, the swab is released into a pipette tip, as shown in Figure 4.

Next the pipette 21 is engaged to the pipette tip, as shown in Figure 5. Then the pipette is used to draw up a predetermined volume (say 500»l) of breakage reagent 33 from the extractant bottle 27. The pipette is engaged with the pipette holder 22 and allowed to stand for a predetermined time period (e.g 60 seconds). During this period the breakage reagent breaks into any bacteria or other living cells which have been picked up on the swab during the sampling process, and releases the ATP contained within the cells.

Then the breakage reagent 33 within the pipette tip is ejected into a cuvette containing the appropriate enzyme. The pipette is used to alternately eject the liquid and draw it up again two or three times, in order to ensure adequate mixing. Having now mixed the enzyme with the breakage reagent, then if there were any living cells on the swab, the ATP will react with the enzyme to commence light emission, the strength of the light emission (number of photons emitted) being related to the concentration of bacteria present. After mixing the breakage reagent into the cuvette, the cuvette is placed in the portable luminescence monitor so that the light output can be measured over a predetermined period of time, to provide a measure of the concentration of bacteria in the sample obtained. It is a feature of the enzyme that a constant light output is produced so that this step is not time dependent.

Referring to Figure 1, the portable luminescence monitor includes a socket 34 in its upper surface, into which the cuvette is placed. The socket is then covered over in light-tight manner. Within the monitor, a photodetector is positioned to receive the light emitted from the liquid within the cuvette. In the example shown, the photodetector comprises an avalanche photodiode. Such a photodiode is extremely light sensitive yet its circuitry requires a low voltage and current power supply, so rendering it suitable for the portable hygiene monitoring system being described. The avalanche photodiode requires an operating temperature of typically +5°C to O°C and its circuitry is arranged to cool it to this level. The monitor may include a digital display, or an analog display, or a printer or a plotter to provide the measurement data.

Figure 6 shows one embodiment of cuvette receiving chamber of the luminescence monitor. A socket 34 is formed in the upper side of the monitor casing and receives the tubular cuvette 24, to rest on a spring-loaded platform 35. An arm 36 is mounted on a post 37 which is rotatably mounted to the monitor casing, and a plunger 38 depends from the lower side of the arm 36. In use, the cuvette 24 is placed in the socket 34, then the arm 36 is turned until the plunger 38 lies above the cuvette, and then the arm is depressed until it lies against the upper side of the monitor. In this position, the arm 36 seats onto an O-ring seal 39 on the monitor casing to ensure light-tightness. In depressing the arm 36, the plunger 38 displaces the cuvette downwardly into the socket 34. An O-ring seal 40 on the plunger seals with the inside of the socket 34 to enhance the light-tightness. The cuvette needs to be positioned so that the centre of its small column of liquid is aligned with an orifice 41 in the side of the socket 34, through which the light from the liquid is passed to the detector. Different reactions will require different volumes of liquid, so that they will require different vertical positions for the cuvette for effective light collection. This requirement is achieved by turning an adjusting screw 42 which is threaded through the arm 36 and which carries the plunger 38 at its lower end. The adjusting screw preferably has a number of predetermined settings, each one corresponding to a different reaction liquid volume or protocol, and serving to depress the cuvette to its required level.

Figure 7 shows an alternative arrangement in which the vertical adjustment of the cuvette 24 is achieved by means of an adjusting screw 42 on the underside of the monitor, acting on the platform 35 on which the cuvette stands. In this case, a spring loaded plunger 38 is closed onto the top of the cuvette once the cuvette is placed into the socket 34.

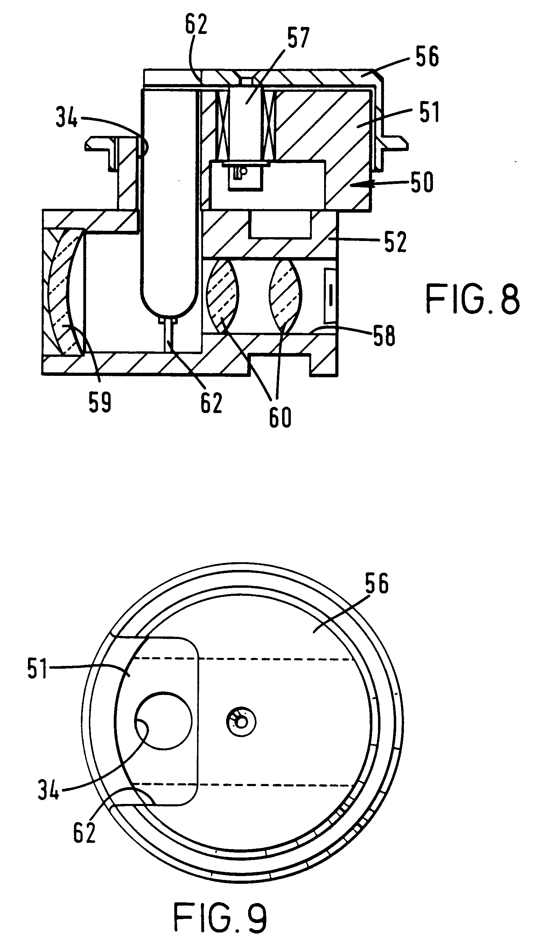

Figures 8 and 9 show a sample chamber for the monitor comprising a body 50 formed with socket 34 for receiving the cuvette.

A top part 51 of the body 50 is circular and receives a rotatable cap 56 which has a peripheral skirt encircling the top part 51 of the body 50. The cap 56 is mounted on a stem 57 which passes through the part 51 and is journalled therein for rotation. The top and skirt of the cap 56 are cut-away over an angular portion as shown at 62. A lower part 52 of the body 50 is formed with a through passage 58 perpendicular to the axis of the socket 34. At one end of this passage, and to one side of the sample tube or cuvette when received in the socket, there is mounted a concave mirror 59. In the passage 58 on the other side of the cuvette are mounted the lens 60 of an optical system for focussing light from the sample in the cuvette onto the avalanche photodiode APD.

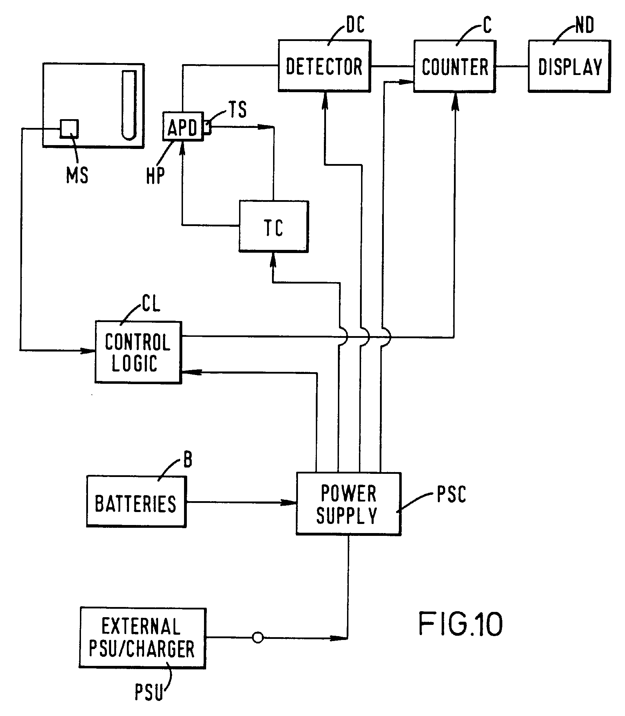

In use of the sample chamber shown in Figures 8 and 9, the cuvette is placed into the socket 34 whilst the cap 56 is in the position shown, i.e. so that the socket 34 is exposed through the cut away 62 of the cap. Then the cap 56 is turned through 180°, to cover the top of the socket 34. The cap 56 and body part 51 are precision-made so that the sample chamber is light-tight when closed. A microswitch is included in the body part 51 and closes as the cap reaches its closed position, to turn on the counter of the APD circuit for a predetermined time, e.g. 10 seconds, as will be described with reference to Figure 10.

The cuvette rests with its bottom on a stem 62. Provision for vertical adjustment of the cuvette may be made by mounting this stem 62 to extend through the bottom of the body part 52 along its axis. This adjusting stem may be displaced in the vertical direction by a manually operable screw such as shown in Figure 7. The provision for vertical adjustment of the cuvette may also be used to allow for different height cuvettes, which are typically 47mm or 55mm in height.

Referring to Figure 10, there is shown the circuit in which the avalanche photodiode APD is connected. The circuit comprises a temperature stabilising system for the avalanche photodiode, comprising a Peltier effect heat pump HP mounted adjacent the APD and supplied with current from a temperature control circuit TC for cooling the APD. A temperature sensing thermistor TS is also mounted adjacent the APD and controls via the circuit TC the magnitude of the current supplied to the Peltier heat pump HP. The output signal from the APD is passed to a detector circuit DC which includes a comparator for comparing the signal with a threshold and providing a pulse of predetermined width and amplitude for each signal exceeding the threshold. These pulses are passed to a counter C. The circuit further comprises a control logic circuit CL to which the microswitch MS in the sample chamber is connected: when the chamber closes and so closes the microswitch, a 10 second timer in the control logic CL is started and the counter C is enabled for the corresponding time interval. At the end of this, the count is displayed on the numerical display ND.

The circuit of Figure 10 further includes a supply circuit PSC powered from rechargeable batteries B and providing the required supplies for the control logic, temperature control, detector, counter and display circuits. The circuit of Figure 10 may be connected to an external power supply unit PSU for operation and/or for recharging the batteries B.

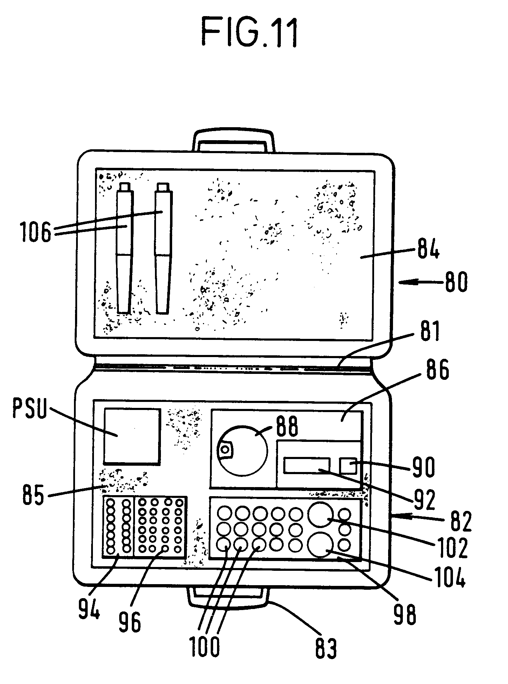

Referring to Figure 11, there is shown another embodiment of portable hygiene monitoring kit comprising a carrying case having upper and lower halves 80,82 hinged to each other at 81, and which can be closed together and fastened by means of integral catches so that the case can be carried by means of a handle 83. When opened up as shown, the two halves of the case lie flat. In the inside of each half of the case, there is a piece of plastics foam cushioning material 84,85 formed with recesses in which the various components of the kit are received. In the lower half there is disposed the portable luminescence monitor 86 having a sample chamber 88 of the type shown in Figures 8 and 9, an on/off switch 90 and a visual display 92. The monitor includes batteries to power its circuits but a power supply unit PSU is also provided together with electrical leads, for connecting the monitor to the mains for powering it and/or recharging its batteries. A pack of individually packaged sterile swabs is provided at 94 and sterile pipette tips are provided at 96. A rack 98 is also provided, including a number of cuvettes 100, and bottles of breakage reagent and enzyme 102, 104. In the upper half of the case, two or more pipettes 106 are provided.

In use of the kit shown in Figure 11, a swab is wiped over the surface to be tested, then placed into a cuvette to which predetermined volumes of breakage reagent and then enzyme are added, using one of the pipettes with one of the pipette tips coupled to it. The cuvette is allowed to stand for a predetermined period in the rack 98, and is then placed into the sample chamber and the latter is closed: the count appearing on the display 92 at the end of the integrating period (typically 10 seconds) of the monitor is recorded as a measure of the microbial activity of the sample taken up by the swab.

## Claims

1. A hygiene monitoring apparatus, comprising a sample chamber (34) for receiving a vessel (24) containing a light-emitting substance, a photodetector for receiving the emitted light, and a electrical circuit for measuring the light received by the photodetector, characterised in that the photodetector comprises an avalanche photodiode (APD) and said electrical circuit includes a counter (C) which counts discrete electrical signals issued by the avalanche photodiode (APD) within a predetermined period of time in response to photons received from the light emitting substance, and circuitry (HP, TS, TC) for cooling and temperature-stabilising said avalanche photodiode.

2. A hygiene monitoring apparatus as claimed in claim 1, characterised in that said sample chamber (34) has a light outlet (41) in a side wall thereof for passing emitted photons to said avalanche photodiode, and an opening in its top through which the sample-containing vessel (24) can be lowered to an operative position relative to said light outlet (41), and means (e.g. 42) for adjusting vertically the operative position at which said sample-containing vessel comes to rest.

3. A hygiene monitoring apparatus as claimed in claim 3, characterised in that the adjusting means comprises an element (42) on which the sample-containing vessel (24) rests, the vertical position of said element being pre-settable.

4. A hygiene monitoring apparatus as claimed in claim 2, characterised in that said adjusting means comprises a spring-loaded element (35) on which the sample vessel (24) rests, and means (38) for bearing against the top of the sample-containing vessel (24) for depressing it through a pre-settable distance.

## Patentansprüche

1. Hygieneüberwachungsgerät, enthaltend eine Probenkammer (34) zur Aufnahme eines eine lichtemittierende Substanz enthaltenden Gefäßes (24), einen Photodetektor zum Empfang des emittierten Lichtes und eine elektrische Schaltung zum Messen des von dem Photodetektor empfangenen Lichtes, dadurch gekennzeichnet, daß der Photodetektor eine Avalanche-Photodiode (APD) umfaßt und die elektrische Schaltung ein Zählwerk (C) enthält, das diskrete elektrische Signale, die von der Avalanche-Photodiode (APD) innerhalb einer vorbestimmten Zeit als Reaktion auf von der lichtemittierenden Substanz ausgesendete Signale erzeugt werden, zählt, sowie Schaltungsbauteile (HP, TS, TC) zur Kühlung und zur Temperaturstabilisierung der Avalanche-Photodiode.

2. Hygieneüberwachungsgerät nach Anspruch 1, dadurch gekennzeichnet, daß die Probenkammer (34) einen Lichtauslaß (41) in einer Seitenwand derselben zum Durchtritt emittierter Photonen an die Avalanche-Photodiode sowie eine Öffnung an ihrem oberen Ende, durch die das die Probe enthaltende Gefäß (24) in eine Arbeitsposition relativ zu dem Lichtauslaß (41) abgesenkt werden kann, sowie Mittel (z. B. 42) zur vertikalen Einstellung der Arbeitsposition aufweist, in der das die Probe enthaltende Gefäß zur Ruhe kommt.

3. Hygieneüberwachungsgerät nach Anspruch 2, dadurch gekennzeichnet, daß die Einstellmittel ein Element (42) umfassen, auf dem das die Probe enthaltende Gefäß (24) aufliegt, wobei die vertikale Position des Elementes einstellbar ist.

4. Hygieneüberwachungsgerät nach Anspruch 2, dadurch gekennzeichnet, daß die Einstellmittel ein federbelastetes Element (35), auf dem das Probengefäß aufsitzt, sowie Mittel (38) zur Anlage gegen das obere Ende des die Probe enthaltenden Gefäßes zum Niederdrücken desselben um eine einstellbare Strecke umfassen.

## Revendications

1. Appareil de contrôle de l'hygiène comprenant une chambre de réception d'échantillons (34) prévue pour recevoir un récipient (24) contenant une substance photoémettrice, un photodétecteur pour capter la lumière émise, et un circuit électrique pour mesurer la quantité de lumière captée par ledit photodétecteur,
caractérisé en ce que ledit photodétecteur comprend une photodiode à avalanche (APD), ledit circuit électrique comprenant un compteur (C) comptant des signaux électriques numériques produits par la photodiode à avalanche (APD) durant un laps de temps prédéterminé, en fonction des photons, émis par la substance photoémettrice, qu'elle reçoit, et des moyens (HP, TS, TC) de refroidissement et de stabilisation de la température de ladite photodiode à avalanche.

2. Appareil de contrôle de l'hygiène selon la revendication 1, caractérisé en ce que ladite chambre de réception d'échantillons (34) comprend, sur une de ses parois, une ouverture (41) destinée à laisser passer les photons vers ladite photodiode à avalanche, et, sur sa partie supérieure, une ouverture à travers de laquelle le récipient (24) contenant les échantillons peut être abaissée dans une position de travail par rapport à ladite ouverture (41), et des moyens (42) d'ajustement vertical de la position de travail à laquelle ledit récipient contenant les échantillons est en appui.

3. Appareil de contrôle de l'hygiène selon la revendication 3, caractérisé en ce que les moyens d'ajustement comprennent un élément (42) sur lequel s'appuie le récipient contenant les échantillons, dont la position verticale est préréglable.

4. Appareil de contrôle de l'hygiène selon la revendication 2, caractérisé en ce que lesdits moyens d'ajustement comprennent un élément (35) monté sur ressort sur lequel s'appuie le récipient contenant les échantillons (24), et des moyens (38) d'appui sur la partie supérieure dudit récipient (24) pour l'abaisser sur une distance préréglable.
